# EUROPÄISCHE PATENTSCHRIFT

(11) **EP 0 684 761 B1**
(45) Veröffentlichungstag und Bekanntmachung des Hinweises auf die Patenterteilung: **27.12.1996**
(21) Anmeldenummer: 94906127.9
(22) Anmeldetag: 29.01.1994
(51) Int. Cl.: A01K 31/00

(54) **ANORDNUNG ZUR AUFZUCHT VON GEFLÜGEL IN KÄFIGANLAGEN**
ARRANGEMENT FOR BREEDING POULTRY IN CAGE BATTERIES
SYSTEME D'ELEVAGE DE VOLAILLE DANS DES BATTERIES DE CAGES

(30) Priorität: 16.02.1993 DE 4304599
(43) Veröffentlichungstag der Anmeldung: 06.12.1995
(73) Patentinhaber: Kühlmann, Josef, D-48366 Laer (DE)
(72) Erfinder: Kühlmann, Josef, D-48366 Laer (DE)
(74) Vertreter: Habbel, Hans-Georg, Dipl.-Ing.
(86) Internationale Anmeldenummer: DE9400096
(87) Internationale Veröffentlichungsnummer: WO9418823

(56) Entgegenhaltungen:
- EP-A- 0 088 500
- DE-A- 2 433 584
- GB-A- 2 103 915
- NL-A- 7 109 684
- NL-A- 7 211 491
- US-A- 4 480 588
- SOVIET PATENTS ABSTRACTS Section PQ, Week 9009, 11. April 1990 Derwent Publications Ltd., London, GB; Class P14, AN 90-065358 & SU,A,1 477 343 (ANIMAL FARM EQUIP) 7. Mai 1989

## Beschreibung

Die Erfindung bezieht sich auf eine Anordnung zur Aufzucht von Geflügel gemäß dem Oberbegriff des Hauptanspruches.

Es ist heute üblich, Geflügel, z. B. sogenannte Masthähnchen oder Broiler, in Käfiganlagen aufzuziehen, d. h. zu mästen, wobei sie bei Erreichen des sogenannten "Schlachtgewichtes" aus diesen Käfigen entnommen und einer Schlachterei zugeführt werden.

Aus der gattungsbildenden GB-21 03 915 A ist eine Aufzuchtanlage bekanntgeworden, bei der der Gitterboden aus einem Kunststoffnetz besteht, das flexibel ist und sich damit dem Tierkörper gut anpaßt. Dieser Gitterboden ist in einzelne Abschnitte aufgeteilt, die in Längsachse der Käfigreihen hintereinandergeschaltet über einen Antrieb aus dem Käfig herausgefahren werden können, und man hofft, daß man nun am Ende in der Käfigreihe bei entsprechender Vorwärtsbewegung der einzelnen Gitterböden die Hühner entnehmen könne. Die Hühner krallen sich aber an dem Gitterboden fest und das Entnehmen der Hühner ist nur unter Verletzungsgefahr der Hühner möglich. Diese bekannte Anordnung stellt also keine Lösung für das Problem dar, wie das Ausstallen der Tiere ohne großen Zeitaufwand und ohne Verletzungsgefahr für die Tiere vorgenommen werden kann.

Aus der NL-A-71 09 684 ist es bekanntgeworden, bei Käfiganlagen unterhalb von Gitterböden ein umlaufendes Förderband vorzusehen, das als Kotförderband ausgebildet ist. Zwischen der Unterseite der Gitterböden und der Oberseite des Kotförderbandes ist ein Transportraum ausgebildet. Die Gitterböden sind dabei in eine geöffnete Stellung bewegbar, wodurch die sich auf diesen Böden befindenden Tiere gezwungen werden, in den darunterliegenden Transportraum zu fallen. Gemäß dem Vorschlag entsprechend der NL-A-71 09 684 werden die Gitterböden um eine parallel zur Längsachse der Kotförderbänder verlaufende Achse geschwenkt.

Bei einer Anordnung gemäß der DE-A-24 33 584 erfolgt die Freigabe des Kotförderbandes durch ein Herausziehen der Gitterböden durch die Öffnungen der Käfigtüren.

Gemäß der SU-A-14 77 343 erfolgt ebenfalls die Herstellung der Verbindung zwischen Käfigboden und darunterliegendem Kotförderband durch Herausziehen der Käfigböden.

Diese seit vielen Jahren bekannten Einrichtungen haben sich in der Praxis nicht bewährt, da einerseits der Raum für die herauszuziehenden Käfigböden nicht zur Verfügung steht, andererseits die Tiere sich beim Herausziehen der Böden oder Schwenken der Böden an den Böden festkrallen und nur schwer auf die darunterliegenden Förderbänder zu verbringen sind.

Der Erfindung liegt die Aufgabe zugrunde, den Arbeitsvorgang des Ausstallens zu vereinfachen und dafür zu sorgen, daß die Übergabe der Tiere vom eigentlichen Käfigboden auf das Förderband ohne Verletzungsgefahr für die Tiere ermöglicht wird.

Diese der Erfindung zugrundeliegende Aufgabe wird durch die Lehre des Hauptanspruches gelöst.

Vorteilhafte Ausgestaltungen sind in den Unteransprüchen erläutert.

Im wesentlichen betrifft die Erfindung eine Vorrichtung zum Ausstallen von Mastküken oder Broiler, wobei der Ausstallungsvorgang dadurch vereinfacht wird, daß der in an sich bekannter Weise als Gitter ausgebildete Boden der einzelnen Käfige zusammenfaltbar ist, so daß die Tiere vom ehemaligen Gitterboden auf ein darunterliegendes Förderband fallen. Überraschend hat sich gezeigt, daß beim Zusammenfalten des Gitterbodens ein Festhalten der Tiere am Gitterboden nicht erfolgt, sondern die Tiere bereitwillig auf das darunterliegende Förderband springen. Da der Abstand vom Gitterboden zum Förderband nicht sehr groß ist, wird hier keine große Unruhe im Käfig erreicht, und nunmehr ist es möglich, mit dem sonst als Kotförderband dienenden Förderband die Tiere aus den Käfigreihen heraus auszufördern. Selbstverständlich ist vorher das Kotförderband von dem sonst darauf befindlichen Kot befreit. Da das Kotförderband üblicherweise als vollflächiges Band ausgebildet ist und nicht als Gitterband, wie der eigentliche Käfigboden, können sich die Tiere auf dem Kotförderband nicht festhalten und werden also an der Abgabestelle des Kotförderbandes in einfachster Weise von diesem Band auf ein Weiterförderband abgegeben, das gemäß einem weiteren Merkmal der Erfindung vorzugsweise aus zwei parallel zueinander angeordneten Führungen für Rollenketten besteht, die im Abstand voneinander angeordnete Auflagerstäbe tragen, die quer zur Längsrichtung des Transportbandes ausgerichtet sind.

Eine solche Einrichtung für sich gesehen ist aus der DE-38 00 817 C1 bekannt.

Gemäß den Unteransprüchen werden verschiedene Maßnahmen, um den Gitterboden zu entfernen, vorgeschlagen, beispielsweise kann der Gitterboden aufgerollt werden, er kann nach vorne oder hinten herausgezogen werden oder er kann, wie dies dann nachfolgend im Ausführungsbeispiel erläutert wird, innerhalb des Käfigs zusammengeschoben werden, so daß dadurch die Hühner nach unten auf das Kotförderband durchfallen.

Ein Ausführungsbeispiel der Erfindung wird nachfolgend anhand der Zeichnungen erläutert. In den Zeichnungen zeigt
- Fig. 1: ganz schematisch die Anordnung einer Käfiganlage quer zur Längsachse der Käfigreihen gesehen,
- Fig. 2: eine schematische Darstellung der Käfiganlage, nunmehr aber in Längsachse der Käfigreihen gesehen,
- Fig. 3: in größerem Maßstab die Ausbildung des Gitterbodens einschl. Handhabe und
- Fig. 4: eine schaubildliche Darstellung eines Käfigabschnittes.

In den Zeichnungen ist mit 1 eine Käfiganlage bezeichnet, die aus den einzelnen übereinander angeordneten Käfigreihen 2, 3 und 4 besteht. Die einzelnen Käfige der Käfigreihen 2, 3 und 4 werden an ihrer Unterseite durch einen Gitterboden 8 begrenzt. Unterhalb des Gitterbodens 8 verläuft für jede Käfigreihe 2, 3 und 4 je ein Förderband 5, 6 oder 7, das normalerweise den durch den Gitterboden fallenden Kot der in den Käfigen der Käfigreihen 2, 3 und 4 gehaltenen Tiere nach außen abfördert.

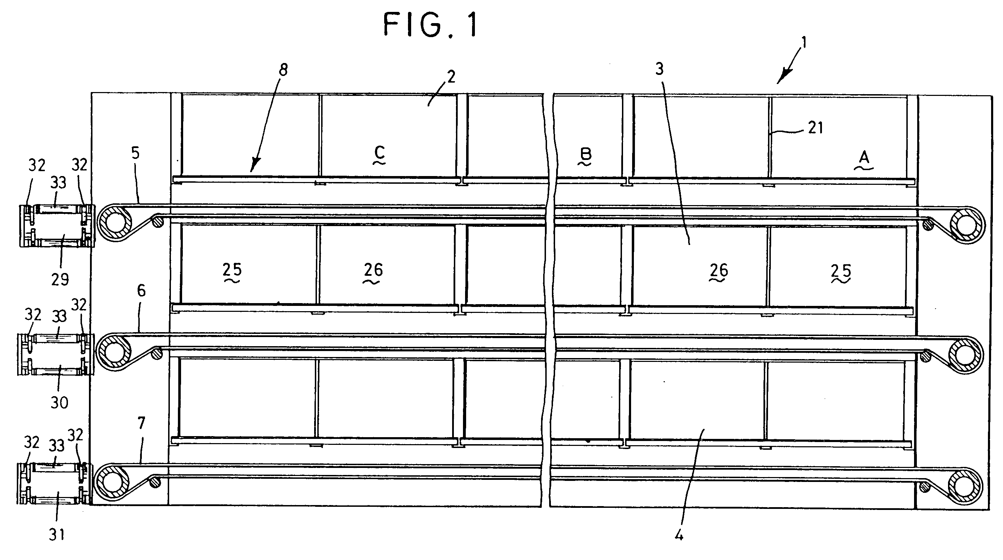

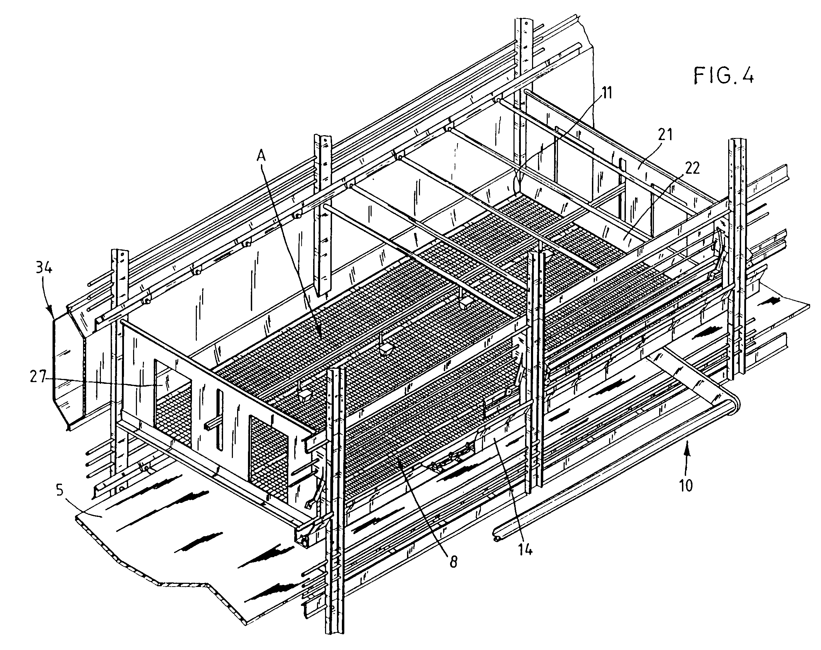

Die einzelnen Gitterböden jeder Käfigreihe 2, 3 und 4 sind als einzelne, in Längsachse der Käfigreihen gesehen aufeinanderfolgende Abschnitte A, B und C ausgebildet, die unabhängig voneinander handhabbar sind. Während bei der in Fig. 1 dargestellten Anordnung ein Abschnitt eines Gitterbodens 8 für zwei in Längsachse der Käfigreihen bzw. des Förderbandes gesehene Käfige 25, 26 dient, ist es selbstverständlich möglich, mehr Käfige mit einem Gitterbodenabschnitt A, B oder C auszurüsten oder für jeden einzelnen Käfig einen solchen Gitterbodenabschnitt A, B oder C vorzusehen (Fig. 4).

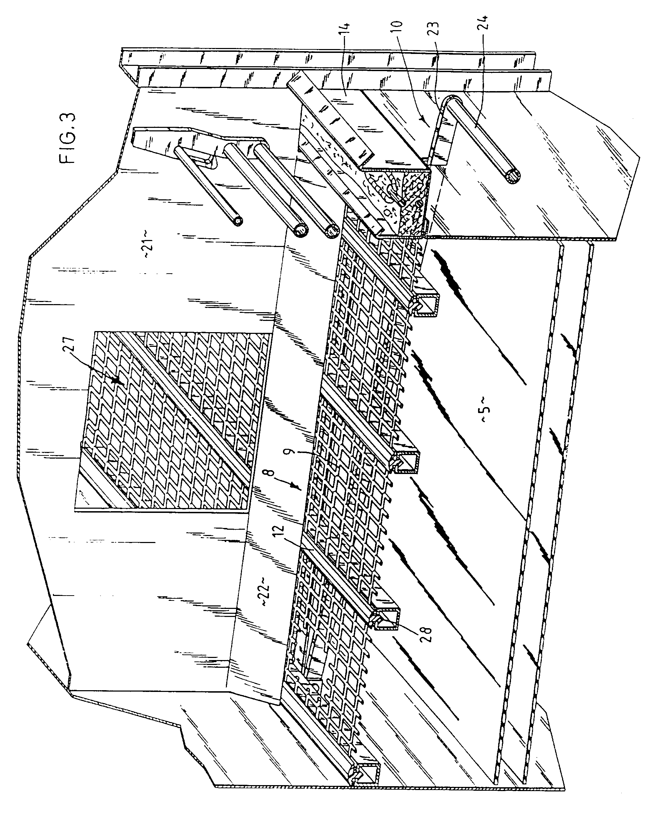

Der eigentliche Gitterboden 8 besteht aus einem Kunststoffnetz 9, welches auf Träger 11 aufruht, wobei bei dem in den Fig. 3 und 4 dargestellten Ausführungsbeispiel die Träger parallel zur Längsachse des Förderbandes 5 und damit parallel zu der Käfigreihe 2 verlaufen. Einzelne Trennwände 21 zwischen den Käfigen 25 und 26 schließen, wie dies in Fig. 3 verdeutlicht ist, an die Oberseite des eigentlichen Gitterbodens 8 über eine Abweiswand 22 an. Hierdurch werden Verletzungen der Tiere mit Sicherheit bei Betätigen des Gitterbodens 8 ausgeschaltet. In diesen die einzelnen Käfige 25 und 26 abtrennenden Trennwänden 21 sind - wie dies Fig. 3 verdeutlicht - Durchtrittsöffnungen 27 vorgesehen, die eine Kommunikation der Tiere zwischen den einzelnen Käfigen ermöglichen, so daß Tiere vom einen zum anderen Käfig wandern können.

Das Kunststoffnetz 9 ist auf den Trägern 11 über Druckleisten 12 festgelegt, die druckknopfartig wirken, wobei aber die in die Träger 11 eingreifenden Einrastteile 28 der Druckleisten 12 so unterteilt sind, daß es nicht erforderlich ist, das eigentliche Kunststoffnetz 9 im Bereich der Träger 11 und der Druckleisten 12 vollständig zu unterbrechen, sondern die Einrastteile 28 der Druckleisten 12 durchgreifen die Öffnungen des Gitterbodens 8 des Kunststoffnetzes, während die Oberseite der Druckleisten 12 durchgehend sind.

An den in Fig. 3 links gelegenen letzten Träger 11 greift eine Handhabe 10 an, die im wesentlichen aus einer Zugstange 23 und einem Griff 24 besteht, wobei die Zugstange 23 - wie dies in Fig. 3 erkennbar ist - an dem letzten Träger 11 beispielsweise angeschraubt, angeschweißt oder angehakt sein kann.

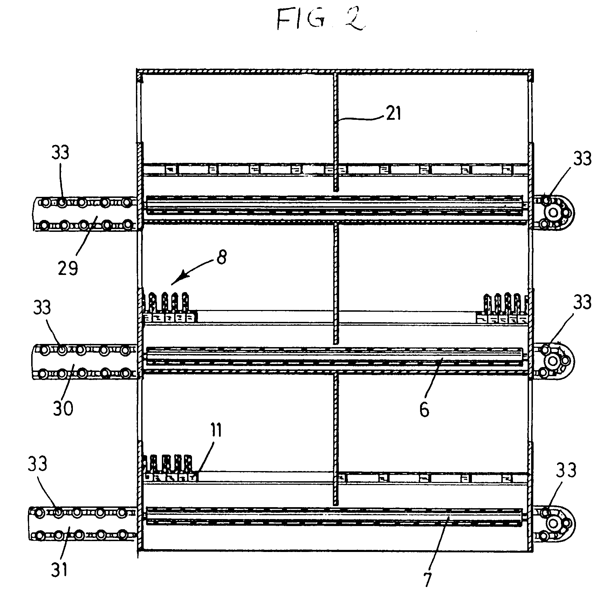

Wird nunmehr der Griff 24 in der Darstellung in Fig. 3 nach rechts bewegt, wird der Gitterboden 8, d. h. also das Kunststoffnetz 9 und die Träger 11, zusammengefaltet, und die einzelnen Träger 11 legen sich aneinander an, so wie dies in Fig. 2 dargestellt ist. Hierbei ist im oberen Bereich der Fig. 2 der eigentliche Gitterboden 8 in seiner Ruhelage dargestellt, so daß also hier Tiere aufstehen können, während in den daruntergelegenen beiden Käfigreihen 2 und 3 der Gitterboden 8 zusammengefaltet ist, so daß nunmehr die sonst sich auf dem Gitterboden 8 befindenden Tiere auf das jeweils zugeordnete Förderband 5, 6 bzw. 7 gelangen.

Durch Betätigen der Handhabe 10 für die einzelnen Gitterbodenabschnitte A, B und C ist nunmehr ein leichtes Ausstallen der sonst auf den Gitterböden 8 aufstehenden Tiere möglich. Die nunmehr nach Wegnahme des Gitterbodens 8 auf das Förderband 5, 6 oder 7 gelangten Tiere können durch Bewegung des Förderbandes ausgetragen werden, wobei gemäß Fig. 1 und 2 im Abgabebereich des Förderbandes nunmehr Transportbänder 29, 30 und 31 vorgesehen sind. Diese Transportbänder bestehen im wesentlichen aus zwei Rollenketten 32, zwischen denen quer zur Förderrichtung jedes Transportbandes Auflagerstäbe 33 eingeschaltet sind. Derartige Transportbänder sind zur Förderung von Eiern in Hühnerzuchtbetrieben allgemein bekannt.

Die von den vollflächigen und glatten Förderbändern 5, 6 und 7 kommenden Tiere sind froh, auf die Auflagerstäbe 33 zu kommen, die ihrem natürlichen Trieb, sich mit ihren Füßen festzukrallen, weitestgehend entgegenkommen. Hierdurch ist ein problemloses Übergeben der Tiere von den Förderbändern 5, 6 und 7 auf die Förderbänder 29, 30 und 31 möglich.

Bei der Darstellung in den Fig. 3 und 4 ist eine Futterrinne 14 erkennbar und in Fig. 4 die Belüftungsleitung 34.

## Patentansprüche

1. Anordnung zur Aufzucht von Geflügel in Käfiganlagen (1) mit einem aus einem flexiblen Netz (9) gebildeten Gitterboden (8), der in Längsachse jeder Käfigreihe (2, 3, 4) gesehen in einzelne voneinander unabhängige und aufeinanderfolgende Abschnitte (A, B, C) unterteilt ist und unterhalb jeder Käfigreihe (2, 3, 4) angeordneten, je als in Längsachse der Käfigreihen (2, 3, 4) umlaufendes Förderband (5, 6, 7) ausgebilden Kotsammelvorrichtungen, dadurch gekennzeichnet, daß die Kotsammelvorrichtung ist und der Gitterboden (8) jedes Abschnittes (A, B, C) von außerhalb der Käfige betätigbar so zusammenfaltbar ist, daß er das darunterliegende Förderband (5, 6, 7) freigibt.

2. Anordnung nach Anspruch 1, dadurch gekennzeichnet, daß der Gitterboden (8) quer zur Längsachse der Käfigreihen (2, 3, 4) bzw. des jeweiligen Förderbandes (5, 6, 7) zusammenfaltbar ist.

3. Anordnung nach einem der vorhergehenden Ansprüche, dadurch gekennzeichnet, daß das Förderband (5, 6, 7) als Kotförderband und während der Öffnung des Gitterbodens (8) als Tierförderband dient.

4. Anordnung nach einem der vorhergehenden Ansprüche, gekennzeichnet durch eine Handhabe (10), die von einer Betätigungsseite außerhalb des Käfigs zu einem gegenüberliegenden letzten Träger (11) des Gitterbodenabschnittes (A, B, C) führt und mit diesem verbunden ist.

5. Anordnung nach einem der vorhergehenden Ansprüche, dadurch gekennzeichnet, daß der Gitterboden (8) aus einem Kunststoffnetz (9) gebildet ist, das auf voneinander beabstandeten Trägern (11) aufruht und mit den Trägern durch Druckleisten (12) verbunden ist.

6. Anordnung nach einem der vorhergehenden Ansprüche, dadurch gekennzeichnet, daß an den Abgabeenden der Förderbänder (5, 6, 7) Transportbänder (29, 30, 31) für die Tiere vorgesehen sind, wobei diese Transportbänder (29, 30, 31) aus in Führungen geführten Rollenketten (32) bestehen, die im Abstand voneinander angeordnete Auflagerstäbe (33) tragen, die quer zur Längsrichtung des Transportbandes ausgerichtet sind.

7. Anordnung nach einem der vorhergehenden Ansprüche, dadurch gekennzeichnet, daß die einzelnen Käfige (25, 26) durch Trennwände (21) voneinander abgetrennt werden, in denen Durchtrittsöffnungen (27) vorgesehen sind, durch die die Tiere von einem Käfig (25) zum anderen Käfig (26) oder umgekehrt wandern können.

## Claims

1. An arrangement for rearing poultry in cage batteries (1), comprising a grid floor (8) which is formed of a flexible net (9) and which is subdivided into individual, independent, successive sections (A, B, C) when viewed in the longitudinal axis of each cage row (2, 3, 4) and excrement collecting devices arranged below each cage row (2, 3, 4), each excrement collecting device being constructed as a conveyor belt (5, 6, 7) revolving in the longitudinal axis of the cage rows (2, 3, 4), characterised in that the grid floor (8) of each section (A, B, C) may be actuated from outside the cages so as to be folded up in such a way that it releases the conveyor belt (5, 6, 7) lying thereunder.

2. An arrangement according to claim 1, characterised in that the grid floor (8) may be folded up perpendicularly to the longitudinal axis of the cage rows (2, 3, 4) or of the respective conveyor belt (5, 6, 7).

3. An arrangement according to either one of the preceding claims, characterised in that the conveyor belt (5, 6, 7) acts as an excrement conveyor belt and also as an animal conveyor belt while the grid floor (8) is open.

4. An arrangement according to any one of the preceding claims, characterised by a handle (10), which extends from an actuating side outside the cage to the last opposing beam (11) of the grid floor section (A, B, C) and is connected therewith.

5. An arrangement according to any one of the preceding claims, characterised in that the grid floor (8) is formed of a plastics net (9), which rests on spaced beams (11) and is connected with the beams by pressure strips (12).

6. An arrangement according to any one of the preceding claims, characterised in that band conveyors (29, 30, 31) are provided for the animals at the discharge ends of the conveyor belts (5, 6, 7), these band conveyors (29, 30, 31) consisting of roller chains (32) which are guided in guides and carry bearing bars (33) arranged at a distance from one another and oriented perpendicularly to the longitudinal direction of the band conveyor.

7. An arrangement according to any one of the preceding claims, characterised in that the individual cages (25, 26) are separated from each other by separating walls (21), in which passage openings (27) are provided through which the animals may wander from one cage (25) to another cage (26) or vice versa.

## Revendications

1. Système pour l'élevage de volaille dans des batteries de cages (1) avec un fond grillagé (8) formé d'un filet flexible (9), qui est divisé, dans le sens longitudinal de chaque rangée de cages (2, 3, 4), en sections (A, B, C) indépendantes les unes des autres et successives, et avec des dispositifs de collecte des déjections disposées en dessous de chaque rangée de cages (2, 3, 4) et conçus comme une courroie de transport (5, 6, 7) circulant sur l'axe longitudinal des rangées de cages (2, 3, 4), caractérisé en ce que le fond grillagé (8) de chaque section (A, B, C) peut être replié sous l'effet d'un actionnement à partir de l'extérieur des cages, de telle sorte qu'il dégage la courroie de transport (5, 6, 7) située en dessous.

2. Dispositif selon la revendication 1, caractérisé en ce que le fond grillagé (8) peut être replié perpendiculairement à l'axe longitudinal des rangées de cages (2, 3, 4) ou de chaque courroie de transport (5, 6, 7).

3. Dispositif selon l'une ou l'ensemble des revendications précédentes, caractérisé en ce que la courroie de transport (5, 6, 7) sert de courroie de transport des déjections et, pendant l'ouverture du fond grillagé (8), de courroie de transport des animaux.

4. Dispositif selon l'une ou l'ensemble des revendications précédentes, caractérisé en ce qu'il comporte un organe d'actionnement (10) qui va d'un côté d'actionnement extérieur à la cage à un dernier support (11) de la section (A, B, C) du fond grillagé qui lui fait face et qui est relié à celui-ci.

5. Dispositif selon l'une ou l'ensemble des revendications précédentes, caractérisé en ce que le fond grillagé (8) est formé d'un filet de plastique (9), qui repose sur des supports (11) écartés les uns des autres et qui est relié aux supports par des bandes à pression (12).

6. Dispositif selon l'une ou l'ensemble des revendications précédentes, caractérisé en ce qu'il est prévu à l'extrémité de dépose des courroies de transport (5, 6, 7) des convoyeurs (29, 30, 31) pour les animaux, qui se composent de chaînes à rouleaux (32) passant dans des guides, qui portent des barres d'appui (33) situées à distance les unes des autres et orientées perpendiculairement au sens longitudinal de la courroie de transport.

7. Dispositif selon l'une ou l'ensemble des revendications précédentes, caractérisé en ce que les différentes cages (25, 26) sont séparées les unes des autres par des cloisons (21) dans lesquelles sont prévues des ouvertures de passage (27) à travers lesquelles les animaux peuvent passer d'une cage (25) à l'autre (26) ou vice versa.
